**Europäisches Patentamt**

**European Patent Office**

**Office européen des brevets**

(19)

(11) Veröffentlichungsnummer: **0 472 984 A1**

## (12) EUROPÄISCHE PATENTANMELDUNG

(21) Anmeldenummer: **91113404.7**

(22) Anmeldetag: **09.08.91**

(51) Int. Cl.5: **B65G 47/244**

(30) Priorität: **30.08.90 DE 4027433**

(43) Veröffentlichungstag der Anmeldung:
**04.03.92 Patentblatt 92/10**

(84) Benannte Vertragsstaaten:
**DE FR**

(71) Anmelder: **4P Nicolaus Kempten GmbH**
**Ulmer Strasse 18**
**W-8960 Kempten(DE)**
Anmelder: **WILHELM FISCHER**
**SPEZIALMASCHINENFABRIK GMBH**
**Weidacher Strasse 1-3**
**W-8968 Durach(DE)**

(72) Erfinder: **Fischer, Wilhelm**
**Weidacher Strasse 1-3**
**W-8968 Durach(DE)**

(74) Vertreter: **Hutzelmann, Gerhard**
**Duracher Strasse 22**
**W-8960 Kempten(DE)**

(54) **Verfahren und Einrichtung zum Drehen eines Gegenstandes.**

(57) Verfahren zum Drehen eines wenigstens abschnittweise unrunden Gegenstandes während dessen Längsbeförderung, wobei der Gegenstand durch eine zusätzlich zur Längsbewegung an ihm angreifende Kraft solange gedreht wird, bis eine Zusammenrastung des unrunden Abschnittes des Gegenstandes mit einer entsprechend ausgebildeten Kulisse stattfindet. Die Einrichtung dazu weist ein mit Mitnehmern(2) versehenes Förderband(1) für die Längsbewegung der Gegenstände(3) auf, wobei oberhalb dieses ersten Förderbandes(1) ein zweites Förderband(14) angeordnet ist, an welchem Kulissen(12) drehfest und vertikal verschiebbar gelagert sind. Beide Förderbänder(1,14) sind synchron zueinander angetrieben und beiderseits des unteren Förderbandes sind zwei Bandantriebe(7,8) angeordnet, welche an zwei einander gegenüberliegenden Stellen eines runden Abschnittes des Gegenstandes(3) angreifen und die mit unterschiedlicher Geschwindigkeit angetrieben sind.

Fig. 1

Die Erfindung bezieht sich auf ein Verfahren zum Drehen eines wenigstens abschnittweise unrunden Gegenstandes während dessen Längsbeförderung.

Werden unrunde Gegenstände mit einer Umverpackung aus Karton versehen, so ist es notwendig, die Gegenstände unmittelbar vor dem Anbringen der Umverpackung auszurichten.

Der Erfindung liegt die Aufgabe zugrunde, ein Verfahren und eine Einrichtung aufzuzeigen, mit denen die Gegenstände auf ihrem Weg zur Umverpackungsstation schnell und zuverlässig ausgerichtet werden können.

Diese Aufgabe wird erfindungsgemäß dadurch gelöst, daß der Gegenstand durch eine zusätzlich zur Längsbewegung an ihm angreifende Kraft solange gedreht wird, bis eine Zusammenrastung des unrunden Abschnittes des Gegenstandes mit einer entsprechend ausgebildeten Kulisse stattfindet.

Es ist damit während der Zuführung der Gegenstände zur Umverpackungsstation lediglich eine zusätzliche Drehbewegung des Gegenstandes notwendig, die solange anhält, bis die gewünschte Lage erreicht ist. Diese wird dann von der Kulisse solange fixiert, bis keine nachfolgende Verdrehung mehr zu befürchten ist.

Eine vorteilhafte Weiterbildung des erfindungsgemäßen Verfahrens liegt darin, daß der Gegenstand auf einem vorzugsweise als Kette ausgebildeten und mit Mitnehmern versehenen Förderband steht und von wenigstens einem an seinem wenigstens annähernd kreisrunden Abschnitt angreifenden Bandantrieb gedreht wird.

Ein Bandantrieb hat den Vorteil, daß sein zu übertragendes Drehmoment leicht eingestellt werden kann und damit der Drehantrieb auch noch nach dem Zusammenrasten des Gegenstandes mit der Kulisse wirksam sein kann ohne daß Beschädigungen am Gegenstand und/oder am Bandantrieb zu befürchten wären.

Bei einem Verfahren zum Drehen eines in seinem unteren Abschnitt runden Gegenstandes, dessen oberer Rand unrund ausgebildet ist, wird erfindungsgemäß vorgeschlagen, daß auf dem auf dem Förderband stehenden Gegenstand eine Kulisse aufliegt, die mit einer dem Behälterrand angepaßten Ausnehmung versehen ist und die höhenverschiebbar und drehfest an einem weiteren Förderband befestigt ist, welches synchron mit dem unteren Förderband angetrieben wird.

Bei einer derartigen Ausgestaltung des erfindungsgemäßen Verfahrens kann die Kulisse lediglich mit ihrem Eigengewicht auf dem Gegenstand aufliegen, so daß keine übermäßig große Reibung zu überwinden ist.

Ebenfalls sehr vorteilhaft ist es, wenn erfindungsgemäß beiderseits des runden Abschnittes des Gegenstandes je ein Bandantrieb vorgesehen ist, die mit unterschiedlicher Geschwindigkeit auf den Gegenstand einwirken.

Durch diese symetrische Anordnung zweier Bandantrieb ist für den Gegenstand keine weitere Führung während der Drehbewegung notwendig.

Eine erfindungsgemäße Einrichtung zum Drehen eines wenigstens abschnittweisen unrunden Gegenstandes während seiner Längsbewegung ist dadurch gekennzeichnet, daß ein vorzugsweise als Kette ausgebildetes und mit Mitnehmern versehenes Förderband für die Längsbewegung der Gegenstände vorgesehen ist, daß oberhalb dieses ersten Förderbandes ein zweites Förderband angeordnet ist, an welchem Kulissen drehfest und vertikal verschiebbar gelagert sind, wobei beide Förderbänder synchron zueinander angetrieben sind, und daß beiderseits des unteren Förderbandes zwei Bandantriebe angeordnet sind, welche mit unterschiedlicher Geschwindigkeit angetrieben sind und an zwei einander gegenüberliegenden Stellen eines runden Abschnittes des Gegenstandes angreifen.

Mit einer derartigen Einrichtung ist gewährleistet, daß das Drehen sehr rationell innerhalb der Zuführstrecke der Gegenstände zur Umverpackungsstation durchgeführt werden kann.

In der Zeichnung ist die Erfindung anhand eines Ausführungsbeispiels veranschaulicht. Dabei zeigen:

Fig.1      eine schematische Draufsicht auf ein Förderband an dem seitlich zwei Bandantriebe vorgesehen sind und

Fig.2      eine Seitenansicht, bei der eine Kulisse in ihrer den Gegenstand fixierenden Lage gezeigt ist.

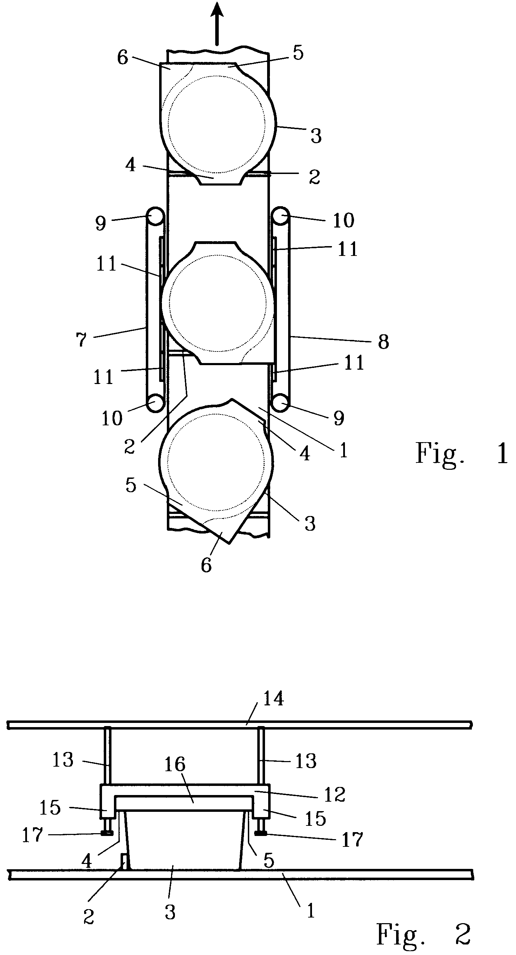

Mit 1 ist in Fig.1 ein als Gliederkette ausgebildetes Förderband bezeichnet, an dessen Oberseite nach oben stehende Mitnehmer 2 befestigt sind. Förderband und Mitnehmer sind zum Transport eines schüsselförmigen, im Querschnitt kreisförmigen Gegenstandes 3 vorgesehen, der mit zwei Handgriffen 4 und 5 ausgestattet und auf den eine Verschlußfolie 6 aufgesiegelt ist. Diese Verschlußfolie 6 steht neben dem einen der beiden Handgriffe 4,5 über den Rand des Gegenstandes vor, ist aber sonst der Form des Gegenstandes einschließlich der Handgriffe angepaßt. Seitlich neben dem Förderband 1 sind zwei Bandantriebe 7 und 8 angeordnet, die am Gegenstand 3 unterhalb der Handgriffe 4,5 angreifen. Diese Bandantriebe sind endlos ausgebildet und über zwei Umlenkrollen 9,10 geführt von denen eine antreibbar ausgebildet ist. Auf der dem Gegenstand 3 zugekehrten Bandseite sind mehrere nebeneinanderliegende Preßstücke 11 vorgesehen, mit denen die Anpreßkraft des Bandantriebes an den Gegenstand einstellbar ist.

Oberhalb jedes Gegenstandes 3 ist, wie in Fig.2 dargestellt, jeweils eine Kulisse 12 vorgesehen, die über vertikale Bolzen 13 an einem weiteren Förderband 14 befestigt sind. Diese Kulisse 12 ist an ihrer Unterseite mit einem Rand 15 versehen, der eine Ausnehmung 16 umgibt. Mit diesem Rand liegt die Kulisse jeweils auf dem Rand eines Gegenstandes auf und gleitet bei entsprechender Stellung des Gegenstandes nach unten, so daß der Gegenstand in die Ausnehmung 16 eingreifen kann. An den unteren freien Enden der Bolzen 13 sind Verdickungen 17 angebracht, die verhindern, daß die Kulisse unten aus den Bolzen herausrutscht. Am Ende des oberen Förderbandes 14 wird die Kulisse 12 dann mit Hilfe dieser Verdickungen angehoben und nach oben vom Gegenstand 3 abgezogen, der nun in ausgerichteter Stellung zum Anlegen einer Umverpackung zur Verfügung steht.

**Patentansprüche**

1. Verfahren zum Drehen eines wenigstens abschnittweise unrunden Gegenstandes während dessen Längsbeförderung, **dadurch gekennzeichnet**, daß der Gegenstand(3) durch eine zusätzlich zur Längsbewegung an ihm angreifende Kraft solange gedreht wird, bis eine Zusammenrastung des unrunden Abschnittes des Gegenstandes mit einer entsprechend ausgebildeten Kulisse stattfindet.

2. Verfahren nach Anspruch 1, **dadurch gekennzeichnet**, daß der Gegenstand(3) auf einem vorzugsweise als Kette ausgebildeten und mit Mitnehmern versehenen Förderband steht und von wenigstens einem an seinem wenigstens annähernd kreisrunden Abschnitt angreifenden Bandantrieb gedreht wird.

3. Verfahren nach Anspruch 1 od. 2 zum Drehen eines in seinem unteren Abschnitt runden Gegenstandes, dessen oberer Rand unrund ausgebildet ist, **dadurch gekennzeichnet**, daß auf dem auf dem Förderband stehenden Gegenstand(3) eine Kulisse aufliegt, die mit einer dem Behälterrand angepaßten Ausnehmung versehen ist und die höhenverschiebbar und drehfest an einem weiteren Förderband befestigt ist, welches synchron mit dem unteren Förderband angetrieben wird.

4. Verfahren nach einem der vorhergehenden Ansprüche, **dadurch gekennzeichnet**, daß beiderseits des runden Abschnittes des Gegenstandes je ein Bandantrieb vorgesehen ist, die mit unterschiedlicher Geschwindigkeit auf den Gegenstand einwirken.

5. Einrichtung zum Drehen eines wenigstens abschnittweisen unrunden Gegenstandes während seiner Längsbewegung, **dadurch gekennzeichnet**, daß ein vorzugsweise als Kette ausgebildetes und mit Mitnehmern(2) versehenes Förderband(1) für die Längsbewegung der Gegenstände(3) vorgesehen ist, daß oberhalb dieses ersten Förderbandes(1) ein zweites Förderband(14) angeordnet ist, an welchem Kulissen(12) drehfest und vertikal verschiebbar gelagert sind, wobei beide Förderbänder(1,14) synchron zueinander angetrieben sind, und daß beiderseits des unteren Förderbandes(1) zwei Bandantriebe(7,8) angeordnet sind, welche mit unterschiedlicher Geschwindigkeit angetrieben sind und an zwei einander gegenüberliegenden Stellen eines runden Abschnittes des Gegenstandes(3) angreifen.

Fig. 1

Fig. 2

## EINSCHLÄGIGE DOKUMENTE

EP 91113404.7

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| A | DE - B2 - 2 415 043 <br> (BALL BROTHERS) <br> * Fig. 1 * <br> -- | 1,2,4,5 | B 65 G 47/244 |
| A | DE - A1 - 3 710 105 <br> (UNILEVER) <br> * Gesamt * <br> -- | 1,3,5 | |
| A | DE - A1 - 3 231 862 <br> (BANSS) <br> * Fig. 1 * <br> -- | 1,5 | |
| A | US - A - 3 982 627 <br> (ISOHATA) <br> * Zusammenfassung * <br> ---- | 1,5 | |

|  |
|---|
| RECHERCHIERTE SACHGEBIETE (Int. Cl.⁵) |
| B 65 G |

Der vorliegende Recherchenbericht wurde für alle Patentansprüche erstellt.

| Recherchenort | Abschlußdatum der Recherche | Prüfer |
|---|---|---|
| WIEN | 21-10-1991 | BAUMGARTNER |